# EUROPÄISCHE PATENTSCHRIFT

(11) **EP 3 359 900 B1**
(45) Veröffentlichungstag und Bekanntmachung des Hinweises auf die Patenterteilung: **24.02.2021**
(21) Anmeldenummer: 16777907.3
(22) Anmeldetag: 04.10.2016
(51) Int. Cl.: F28D 9/00, F28F 3/02, B23K 1/00, B23K 1/008, B23K 1/19, B23K 1/20, B21D 53/04

(54) **RANDLEISTEN MIT OBERFLÄCHENSTRUKTUR FÜR PLATTENWÄRMETAUSCHER**
SIDE BARS WITH SURFACE STRUCTURE FOR PLATE HEAT EXCHANGER
BARRES LATERALES COMPRENANT DE STRUCTURES DE SURFACES POUR ECHANGEUR THERMIQUE A PLAQUES

(30) Priorität: 06.10.2015 EP 15002856
(43) Veröffentlichungstag der Anmeldung: 15.08.2018
(73) Patentinhaber: Linde GmbH, 82049 Pullach (DE)
(72) Erfinder: AIGNER, Herbert, 84367 Reut-Taubenbach (DE); MATHE, Günther, 84547 Emmerting (DE)
(74) Vertreter: Meilinger, Claudia Sabine
(86) Internationale Anmeldenummer: PCT/EP2016/001640
(87) Internationale Veröffentlichungsnummer: WO 2017/059952

(56) Entgegenhaltungen:
- DE-A1- 2 442 159
- DE-A1-102010 046 913
- GB-A- 2 093 581
- US-A- 3 241 607
- US-A- 3 252 510
- US-A- 4 567 505
- US-A1- 2012 152 507

## Beschreibung

Die Erfindung betrifft einen Plattenwärmeübertrager gemäß Anspruch 1.

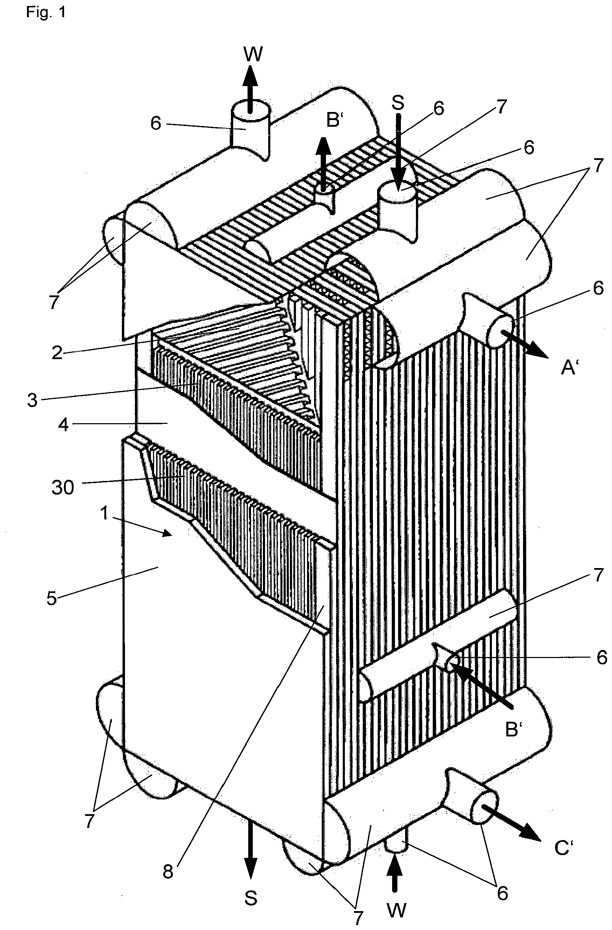

Derartige Plattenwärmeübertrager, insbesondere Aluminium-Plattenwärmeübertrager sind aus dem Stand der Technik bekannt und werden vorzugsweise in einem Ofen gelötet. Solche Plattenwärmeübertrager werden z.B. im ALPEMA-Standard "The standards of the brazed Aluminium Plate-Fin Heat Exchanger Manufacturers Association", Third Edition 2010 auf S. 5, Fig. 1-2 beschrieben und weisen eine Mehrzahl an parallelen Wärmeaustauschpassagen auf, die durch Trennplatten bzw. Trennbleche voneinander getrennt sind, wobei die jeweilige Wärmeaustauschpassage an zumindest zwei Seiten durch je eine Randleiste begrenzt ist, die eine erste Oberfläche und eine der ersten Oberfläche abgewandte zweite Oberfläche aufweist, wobei die beiden Oberflächen mit je einer zugeordneten Trennplatte verlötet sind.

In US 3,252,510 und US 3,241,607 sind derartige Wärmetauscher beschrieben, wobei bei diesen Wärmetauschern die Oberflächen der Randleisten jeweils eine Oberflächenstruktur mit einer Mehrzahl an regelmäßig angeordneten Erhöhungen und Vertiefungen aufweisen.

Hiervon ausgehend liegt der vorliegenden Erfindung die Aufgabe zugrunde, die bisher verwendeten Randleisten dahingehend zu verbessern, dass das Verlöten der Randleisten mit den Trennplatten erleichtert wird sowie die Festigkeit der Lötverbindung verbessert wird.

Dieses Problem wird durch einen Plattenwärmeübertrager mit den Merkmalen des Anspruchs 1 gelöst. Vorteilhafte Ausgestaltungen der Erfindung sind in den Unteransprüchen angegeben und werden nachfolgend beschrieben.

Gemäß Anspruch 1 ist ein Plattenwärmeübertrager vorgesehen, aufweisend eine Mehrzahl an parallelen Wärmeaustauschpassagen, die durch Trennplatten voneinander getrennt sind, wobei die jeweilige Wärmeaustauschpassage an zumindest zwei Seiten durch je eine Randleiste begrenzt ist, wobei die jeweilige Randleiste eine erste Oberfläche und eine der ersten Oberfläche abgewandte zweite Oberfläche aufweist, und wobei die beiden Oberflächen mit je einer zugeordneten Trennplatte verlötet sind. Erfindungsgemäß ist vorgesehen, dass die beiden Oberflächen jeweils eine Oberflächenstruktur mit einer Mehrzahl an regelmäßig angeordneten Erhöhungen und Vertiefungen aufweisen, wobei der Abstand einer Erhöhung zu einer benachbarten Erhöhung oder einer Vertiefung zu einer benachbarten Vertiefung im Bereich von 0,1mm bis 2,5 mm liegt. Die jeweilige Randleiste ist entlang einer Längsachse längserstreckt ausgebildet ist und weist entlang der Längsachse eine größere Ausdehnung auf als senkrecht zur Längsachse. Dabei ist erfindungsgemäß vorgesehen, dass sich die Vertiefungen und/oder Erhöhungen parallel zur Längsachse erstrecken.

Für gewöhnlich werden derartige Randleisten, die auch als Sidebars bezeichnet werden, mittels Strangpressen/Ziehen hergestellt und weisen nach dem Stand der Technik eine vergleichsweise glatte Oberfläche auf, die ungefähr in etwa eine gemittelte Rautiefe (auch Zehnpunkthöhe) von R_{z} = 10µm aufweist. Diese gemittelte Rautiefe wird bekanntermaßen ermittelt, indem eine definierte Messstrecke auf der Oberfläche des Werkstücks in sieben Einzelmessstrecken unterteilt wird, wobei die mittleren fünf Messstrecken gleich groß sind. Die Auswertung erfolgt nur über diese fünf Messstrecken, die in bekannter Weise Gauß-gefiltert werden. Von jeder dieser Einzelmessstrecken des Profils wird die Differenz aus maximalem und minimalem Wert ermittelt. Aus den somit erhaltenen fünf Einzelrauhtiefen wird der Mittelwert gebildet, der die gemittelte Rautiefe angibt.

Aufgrund der vergleichsweise glatten Oberflächen der Randleisten (Sidebars) im Stand der Technik besteht das Risiko von Leckagen durch Fertigungstoleranzen sowie eine erhöhtes Risiko eines Aufschwimmens der Randleisten während des Lötprozesses.

Durch die erfindungsgemäße Oberflächenstruktur kann die jeweilige Oberfläche definiert in die Lotschicht des Trennbleches eintauchen und somit die Möglichkeit für Leckagen, die durch Randleisten am unteren Ende der Höhentoleranz oder durch unzureichende Benetzung des Lotes entstehen, deutlich reduziert werden. Weiterhin kann ein Herausrutschen bzw. Aufschwimmen von Randleisten während des Lötprozesses durch die Oberflächenstrukturen mit Vorteil verhindert werden. Dies wird möglich, da die Oberflächenstrukturen eine definierte Erhöhung der Flächenpressung bedingen, wodurch das flüssige Lot definiert verdrängt werden kann.

Weiterhin wird aufgrund der erfindungsgemäßen Oberflächenstrukturen das Lot auch besser über die beiden Oberflächen der Randleisten verteilt. Niveauunterschiede bezogen auf eine Mittenebene zwischen Erhebungen und Vertiefungen bzw. Wellenbergen und Wellentälern können ausgeglichen werden, beispielsweise falls im Lötofen zwischen den Sidebarstirnseiten (definiert durch eine Breite und eine Höhe) Niveauunterschiede bestehen.

Weiterhin ist gemäß einer bevorzugten Ausführungsform des erfindungsgemäßen Plattenwärmeübertragers vorgesehen, dass die erste und/oder die zweite Oberflächenstruktur jeweils eine gemittelte Rautiefe R_{z} von größer als 15µm, besonders bevorzugt von größer als 30µm, weiter besonders bevorzugt von größer als 45µm aufweisen. Bevorzugt liegt die obere Grenze des erfindungsgemäßen Rautiefenbereiches bei R_{z}=1000µm, besonders bevorzugt bei R_{z}=800µm, weiter bevorzugt bei Rz=500µm.

Weiterhin ist gemäß einer bevorzugten Ausführungsform des erfindungsgemäßen Plattenwärmeübertragers vorgesehen, dass die Oberflächenstrukturen der beiden Oberflächen jeweils durch eine Mehrzahl an parallel zueinander erstreckten Vertiefungen gebildet sind, wobei je zwei benachbarte Vertiefungen durch eine Erhöhung voneinander getrennt sind.

Weiterhin ist gemäß einer bevorzugten Ausführungsform des erfindungsgemäßen Plattenwärmeübertragers vorgesehen, dass die Vertiefungen im Querschnitt die gleiche Form und Größe aufweisen, und/oder dass die Erhöhungen im Querschnitt die gleiche Form und Größe aufweisen.

Entlang der Längsachse weisen die Randleisten jeweils eine Länge auf, wobei die Randleisten senkrecht zur Längsachse eine Höhe in einer jeweils normal zu den angrenzenden Trennplatten verlaufenden Richtung aufweisen. Weiterhin weisen die Randleisten senkrecht zur Längsachse bzw. Länge sowie senkrecht zur Höhe eine Breite auf.

Gemäß einer bevorzugten Ausführungsform der Erfindung ist weiterhin vorgesehen, dass die Breite der jeweiligen Randleiste im Bereich von 10mm bis 50 mm, vorzugsweise im Bereich von 15mm bis 30mm liegt.

Gemäß einer bevorzugten Ausführungsform der Erfindung ist weiterhin vorgesehen, dass die Höhe der jeweiligen Randleiste im Bereich von 3mm bis 14 mm, bevorzugt im Bereich von 4mm bis 10mm liegt.

Weiterhin ist gemäß einer bevorzugten Ausführungsform der Erfindung vorgesehen, dass eine Höhendifferenz (auch Amplitude der Oberflächenstruktur genannt) zwischen einem tiefsten Punkt einer Vertiefung und einem höchsten Punkt einer benachbarte Erhöhung mehr als 0,015mm, besonders bevorzugt mehr als 0,030mm, und weiter besonders bevorzugt mehr als 0,045mm beträgt und vorzugsweise nicht mehr als 1mm, besonders bevorzugt nicht mehr als 0,8mm und weiter bevorzugt nicht mehr als 0,5mm. Die Höhendifferenz bezieht sich dabei auf die Richtung einer Normalen zur jeweiligen Oberfläche der Randleiste.

Insbesondere ist vorgesehen, wie oben bereits dargelegt, dass der Abstand der tiefsten Punkte zweier benachbarter Vertiefungen senkrecht zu deren Längsachsen oder der Abstand der höchsten Punkte zweier benachbarter Erhöhungen senkrecht zu deren Längsachsen im Bereich von 0,1mm bis 2,5 mm liegt.

Vorzugsweise sind die Oberflächenstrukturen der beiden Seiten der jeweiligen Randleiste gemäß einer Ausführungsform der Erfindung jeweils als eine Wellenstruktur ausgebildet. D.h., die Vertiefungen sind vorzugsweise als konkave Wellentäler und die Erhöhungen bevorzugt als konvexe Wellenberge ausgebildet.

Hierbei ist vorzugsweise gemäß einer Ausführungsform der Erfindung vorgesehen, dass der Radius der konvexen Krümmung der jeweiligen Erhöhung und/oder der Radius der konkaven Krümmung der jeweiligen Vertiefung im Bereich von 0,1 mm bis 1,0 mm liegt, bevorzugt im Bereich von 0,2mm bis 0,8mm, wobei der jeweilige Radius in einer senkrecht zur Längsachse verlaufenden Ebene liegt.

Gemäß einer weiteren Ausführungsform der Erfindung ist vorgesehen, dass die jeweilige Vertiefung je durch zwei aufeinanderzulaufende ebene Flanken gebildet ist, die sich an einem tiefsten Punkt der jeweiligen Vertiefung treffen, und wobei die jeweilige Erhöhung durch je zwei aufeinanderzulaufende ebene Flanken gebildet ist, die sich an einem höchsten Punkt der jeweiligen Erhöhung treffen. Auf diese Weise wird eine Oberflächenstruktur der ersten und/oder zweiten Oberfläche gebildet, die im Querschnitt ein Sägezahnprofil aufweist.

Gemäß einer weiteren Ausführungsform der Erfindung ist vorgesehen, dass die jeweilige Vertiefung durch einen ebenen Boden sowie zwei davon abgehende, einander gegenüberliegende ebene Flanken gebildet ist, und wobei die jeweilige Erhöhung durch je ein ebenes Dach sowie zwei davon abgehende, einander gegenüberliegende Flanken gebildet ist, wobei die Böden parallel zu den Dächern verlaufen.

Hierbei kann gemäß einer Ausführungsform der Erfindung vorgesehen sein, dass die Flanken der jeweiligen Vertiefung parallel zueinander sowie senkrecht zum Boden der jeweiligen Vertiefung verlaufen, und dass die Flanken der jeweiligen Erhöhung parallel zueinander sowie senkrecht zum Dach der jeweiligen Erhöhung verlaufen. Auf diese Weise wird eine Oberflächenstruktur der ersten und/oder zweiten Oberseite gebildet, die im Querschnitt ein Rechteckprofil aufweist.

In einer alternativen Ausführungsform ist weiterhin vorgesehen, dass die Flanken der Vertiefungen ausgehend vom Boden der jeweiligen Vertiefung auseinanderlaufen, und dass die Flanken der jeweiligen Erhöhung in Richtung auf das Dach der jeweiligen Erhöhung aufeinander zulaufen. Dies entspricht mit anderen Worten im Querschnitt einem Sägezahnprofil mit abgeflachten Böden der Vertiefungen sowie abgeflachten Dächern der Erhöhungen.

In einer weiteren, alternativen Ausführungsform ist vorgesehen, dass die Flanken der Vertiefungen ausgehend vom Boden der jeweiligen Vertiefung aufeinander zulaufen, und dass die Flanken der jeweiligen Erhöhung in Richtung auf das Dach der jeweiligen Erhöhung auseinanderlaufen. Auf diese Weise wird eine Oberflächenstruktur der ersten und/oder zweiten Oberseite gebildet, die im Querschnitt ein Schwalbenschwanzprofil aufweist.

Gemäß einer bevorzugten Ausführungsform der Erfindung ist weiterhin vorgesehen, dass die jeweilige Randleiste eine Innenseite aufweist, die der jeweiligen Wärmeaustauschpassage zugewandt ist, die die Randleiste begrenzt, sowie eine der Innenseite abgewandte Außenseite, die insbesondere einen Teil der Außenseite des Plattenwärmeübertragers bildet. Die Innenseite der jeweiligen Randleiste verbindet die erste Oberfläche der jeweiligen Randleiste mit der zweiten Oberfläche der jeweiligen Randleiste, In gleicher Weise verbindet die Außenseite ebenfalls die erste Oberfläche mit der zweiten Oberfläche der jeweiligen Randleiste.

Gemäß einer bevorzugten Ausführungsform der Erfindung ist vorgesehen, dass die Innenseite und/oder die Außenseite der jeweiligen Randleiste jeweils zwei zu einem Dach aufeinander zulaufende Flächen aufweisen. Gemäß einer Ausführungsform der Erfindung ist diesbezüglich vorgesehen, dass das jeweilige Dach eine Höhe im Bereich von 1mm bis 8 mm aufweist. Derartige Dächer werden auch als Nasen bezeichnet.

Durch die besagten Dächer bzw. Nasen der Innen- und/oder Außenseite wird mit Vorteil verhindert, dass Wärmeleitstrukturen (sogenannte Fins oder Lamellen) in der jeweiligen Wärmeaustauschpassage während des Lötprozesses unter die jeweilige Randleiste rutschen bzw. die jeweilige Randleiste über einen Steg einer solchen Struktur rutscht.

Die Dächer/Nasen weisen im Querschnitt senkrecht zur Längsachse vorzugsweise eine Dreiecksform auf, wobei eine Spitze des jeweiligen Daches vorzugsweise abgerundet ausgebildet ist.

Gemäß einer bevorzugten Ausführungsform der Erfindung ist vorgesehen, dass das jeweilige Dach einer Innen- oder Außenseite eine Höhe im Bereich von 1 mm bis 8 mm, besonders bevorzugt ein Höhe im Bereich von 1 mm bis 5mm aufweist.

Die beiden Oberflächen der jeweiligen Randleiste können insbesondere auch unterschiedliche Oberflächenstrukturen bzw. Kombinationen der hierin beschriebenen Strukturen aufweisen. So kann z.B. eine Oberfläche als Oberflächenstruktur ein Wellenprofil aufweisen, während die andere Oberfläche ein Sägezahnprofil aufweist etc.

Weiterhin weist der Plattenwärmeübertrager in den einzelnen Wärmeaustauschpassagen jeweils vorzugsweise eine Wärmeleitstruktur auf, die jeweils zwischen zwei einander gegenüberliegenden Trennplatten angeordnet ist, die jeweils an der Wärmeleitstruktur anliegen und vorzugsweise mit dieser verlötet sind. Die Wärmeleitstrukturen dienen dazu, Wärme aufzunehmen und an angrenzende Komponenten, z.B. Trennplatten, des Plattenwärmeübertragers weiterzuleiten.

Wie die Randleisten sind die Wärmeleitstrukturen vorzugsweise aus einem Aluminium gefertigt. Die beiden äußersten Trennplatten des Plattenwärmeübertragers werden auch als Deckplatten bezeichnet. Entsprechend sind insbesondere zwei äußerste Wärmeaustauschpassagen vorhanden, die jeweils durch eine Deckplatte und eine Trennplatte begrenzt werden.

Bei den Wärmeleitstrukturen, kann es sich gemäß einer Ausführungsform der Erfindung um flächige, plattenartige Elemente, handeln, die sich entlang einer Erstreckungsebene erstrecken, nämlich parallel zu den Trennplatten, und in einem senkrecht zur Erstreckungsebene verlaufenden Querschnittsebene ein wellenförmiges Profil aufweisen. Andere derartige Profile sind auch denkbar. Solche Wärmeleitstrukturen werden auch als Fins oder Lamellen bezeichnet. Die Wärmeleitstrukturen bilden zusammen mit den angrenzenden Trennplatten vorzugsweise jeweils eine Mehrzahl an insbesondere parallelen Kanälen aus, in denen der jeweilige Wärmeträger (z.B. ein Fluid) geführt werden kann.

Wie eingangs bereits erläutert, werden die einzelnen Passagen zu den beiden Seiten bzw. zu mehreren oder allen Seiten hin durch die erfindungsgemäßen Randleisten (Sidebars) begrenzt, die ebenfalls bevorzugt aus einem Aluminium gefertigt sind.

Die an der Wärmeübertragung beteiligten Ströme (z.B. Fluide) werden bevorzugt in benachbarten Wärmeaustauschpassagen geführt, so dass sie Wärme austauschen können.

Der Plattenwärmeübertrager weist zum Einleiten eines Stroms in zugeordnete Wärmeaustauschpassagen einen Header mit Stutzen auf, über den der betreffende Strom in die zugeordneten Passagen des Plattenwärmeübertragers einleitbar ist. Dabei kann der Header mit dem Plattenwärmeübertrager verschweißt sein. Sind mehrere Ströme in zugeordnete Passagen einzuleiten, weist der Plattenwärmeübertrager bevorzugt eine entsprechende Anzahl an Headern mit Stutzen auf.

Zum Abziehen des einen oder der mehreren Ströme aus den jeweils zugeordneten Passagen weist der Plattenwärmeübertrager ebenfalls bevorzugt eine entsprechende Anzahl an Headern mit Stutzen auf, über die der jeweilige Strom aus dem Plattenwärmeübertrager abziehbar ist.

Die Header sind jeweils dazu ausgebildet den einzuleitenden Strom auf die einzelnen Passagen zu verteilen bzw. den abzuziehenden Strom zu sammeln, so dass dieser über den am Header vorgesehenen Stutzen abziehbar ist.

Ein weiterer Aspekt der Erfindung betrifft ein Verfahren zur Herstellung eines Plattenwärmeübertragers, wobei zumindest eine Randleiste bereitgestellt wird, die eine erste und eine der ersten Oberfläche abgewandte zweite Oberfläche aufweist, wobei die beiden Oberflächen, insbesondere nach Herstellung einer Leistenform der mindestens einen Randleiste, so bearbeitet werden, dass die beiden Oberflächen jeweils eine Oberflächenstruktur mit einer Mehrzahl an regelmäßig angeordneten Erhöhungen und Vertiefungen aufweisen, und wobei die beiden Oberflächen mit je einer benachbarten Trennplatte verlötet werden, und wobei der Abstand einer Erhöhung zu einer benachbarter Erhöhung oder einer Vertiefung zu einer benachbarten Vertiefung im Bereich von 0,1mm bis 2,5 mm liegt. Des Weiteren ist die jeweilige Randleiste entlang einer Längsachse längserstreckt ausgebildet ist und weist entlang der Längsachse eine größere Ausdehnung auf als senkrecht zur Längsachse. Erfindungsgemäß erstrecken sich die Vertiefungen und/oder die Erhöhungen parallel zur Längsachse.

Gemäß einer Ausführungsform des erfindungsgemäßen Verfahrens erfolgt die Erzeugung der jeweiligen Oberflächenstruktur durch ein Ziehverfahren, z.B. indem die beispielsweise stranggepressten Randleisten durch eine entsprechende Matrize geführt oder gezogen werden, die die Oberflächenstruktur in die beiden Oberflächen der jeweiligen Randleiste einbringt.

Gemäß einer alternativen Ausführungsform des erfindungsgemäßen Verfahrens erfolgt die Erzeugung der jeweiligen Oberflächenstruktur durch Walzen oder eine spanende Bearbeitung.

Mit den eine erfindungsgemäße Oberflächenstruktur aufweisenden Randleisten kann im Übrigen der Plattenwärmeübertrager in bekannter Weiser gefertigt werden, indem Bauteile des Plattenwärmeübertragers, wie die Trennplatten, Randleisten und Wärmeleitstrukturen, aufeinander angeordnet werden, wobei zwischen zwei zu verbindenden Bauteilen jeweils ein Lotmaterial vorgesehen wird und die aufeinander angeordneten Bauteile miteinander in einem Ofen verlötet werden.

Anschließend können an dem solchermaßen erzeugten Plattenwärmeübertragerblock des Plattenwärmeübertragers die besagten Header und Stutzen angeschweißt werden.

Weitere Einzelheiten und Vorteile der Erfindung sollen durch die nachfolgenden Figurenbeschreibungen von Ausführungsbeispielen anhand der Figuren erläutert werden. Es zeigen:
- Fig. 1: einen erfindungsgemäßen Plattenwärmeübertrager mit oberflächenstrukturierten Randleisten;
- Fig. 2: eine schematische Schnittansicht einer Wärmeleitstruktur (Fin) nach Art der Fig 1;
- Fig. 3: eine Querschnittsansicht einer erfindungsgemäßen Randleiste mit wellenförmigen Oberflächenstrukturen, wobei ein Detail mit einem Rahmen und der Ziffer III gekennzeichnet ist;
- Fig. 4: das Detail III der Figur 3;
- Fig. 5: eine Querschnittsansicht einer weiteren erfindungsgemäßen Randleiste mit sägezahnförmigen Oberflächenstrukturen, wobei ein Detail mit einem Rahmen und der Ziffer III gekennzeichnet ist;
- Fig. 6: das Detail III der Figur 5;
- Fig. 7: eine Querschnittsansicht einer weiteren erfindungsgemäßen Randleiste mit rechteckförmigen Oberflächenstrukturen, wobei ein Detail mit einem Rahmen und der Ziffer III gekennzeichnet ist;
- Fig. 8: das Detail III der Figur 7;
- Fig. 9: eine Querschnittsansicht einer weiteren erfindungsgemäßen Randleiste mit abgeflachten sägezahnförmigen Oberflächenstrukturen, wobei ein Detail mit einem Rahmen und der Ziffer III gekennzeichnet ist;
- Fig. 10: das Detail III der Figur 9;
- Fig. 11: eine Querschnittsansicht einer weiteren erfindungsgemäßen Randleiste mit schwalbenschwanzförmigen Oberflächenstrukturen, wobei ein Detail mit einem Rahmen und der Ziffer III gekennzeichnet ist; und
- Fig. 12: das Detail III der Figur 11.

Figur 1 zeigt einen Plattenwärmeübertrager 1, der für den Wärmeaustausch zwischen zumindest zwei Strömen S, W konfiguriert ist, wobei optional Wärmeaustauschmöglichkeiten für weitere Prozessströme A', B', C' vorgesehen sein können. Der Plattenwärmeübertrager 1 ist blockförmig ausgebildet und mit verschiedensten Mitteln 6 zur Zu- und Abführung der einzelnen Prozessmedien S, W ausgestattet, die auch als Stutzen bezeichnet werden. Der Plattenwärmeübertrager 1 weist ebenfalls mehrere Mittel 7 zum Verteilen und Sammeln der einzelnen Prozessströme S, W bzw. A', B', C' auf, die auch als Header bezeichnet werden und an den Wärmeübertragerblock angeschweißt sein können.

Der Plattenwärmeübertrager 1 weist eine Vielzahl von stapelförmig angeordneten Wärmeaustauschpassagen (kurz Passagen) 30 auf, die durch Trennplatten (z.B. Trennbleche) 4 voneinander getrennt sind und nach außen hin beidseitig durch Trennplatten 5 begrenzt sind, die auch als Deckplatten (z.B. Deckbleche) 5 bezeichnet werden. In den einzelnen Passagen 30 strömen die verschiedenen Medien S, W. Der Wärmeaustausch erfolgt indirekt über den Wärmekontakt, der durch die Trennplatten 4 und durch die in den Passagen 30 angeordneten Wärmeleitstrukturen 3 hergestellt wird.

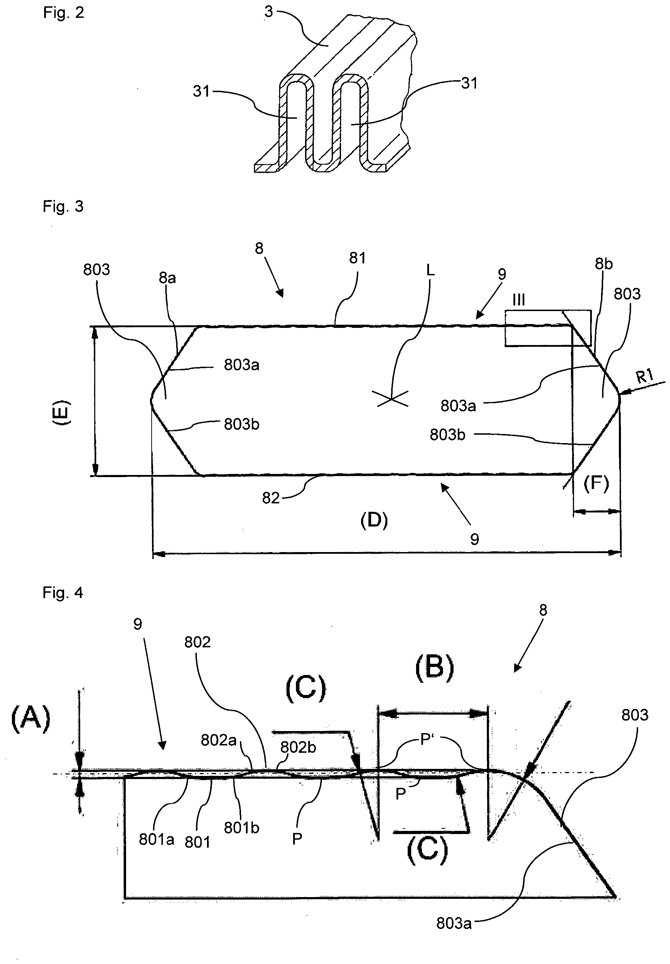

Bei der jeweiligen Wärmeleitstruktur 3 kann es sich um eine wellenförmige Struktur 3 handeln, die auch als Fin oder Lamelle 3 bezeichnet wird und ein im Querschnitt wellenförmiges Profil aufweisen kann. Bei einem solchen Profil kann es sich jedoch auch um ein anderweitig geformtes Profil handeln, das zusammen mit den beiden angrenzenden Trennplatten jeweils eine Vielzahl an nebeneinander angeordneten sowie parallelen Kanälen 31 für ein Fluid bildet (vgl. Fig. 2). Die einzelnen Fins 3 begrenzen mit den beiden jeweils angrenzenden Trennplatten 4 bzw. 5 je eine Passage 30 des Plattenwärmeübertragers 1.

Über die Stutzen 6 werden die einzelnen Medien S, W in die Header 7 geführt und so auf die jeweils vorgesehenen, stapelförmig angeordneten Passagen 30 verteilt. Im Eingangsbereich der Passagen 30 befinden sich sogenannte Verteilerfins 2, die für eine gleichmäßige Verteilung des Mediums S, W innerhalb der einzelnen Passagen 30 sorgen. Die Medien S, W strömen somit quer zur Wellenrichtung der Fins 3 durch die Passagen 30. Die Wärmeleitstrukturen 3 sind mit den Trennblechen 4 über Lötverbindungen verbunden, wodurch ein intensiver Wärmeleitkontakt hergestellt wird. Dadurch kann ein Wärmeaustausch zwischen zwei verschiedenen Medien S, W erfolgen, die in benachbarten Passagen 30 strömen. In Strömungsrichtung gesehen am Ende der Passage 30 befinden sich ähnliche Verteilerfins 2, die die Medien S, W aus den Passagen 30 in die Header 7 führen, wo sie gesammelt und über den Stutzen 6 abgezogen werden.

Die einzelnen Passagen 30 sind durch Randleisten 8, die auch als Sidebars bezeichnet werden, nach außen abgeschlossen.

Der Plattenwärmeübertrager 1 wird bevorzugt gelötet. Die einzelnen Passagen 30 mit den Fins 3, Verteilerfins 2, Trennplatten 4, Deckplatten 5 und Sidebars 8 werden aufeinandergestapelt, mit Lot versehen und in einem Ofen hartgelötet. Auf den dadurch entstanden Block werden dann Header 7 und Stutzen 6 aufgeschweißt.

Um die Lötverbindungen zwischen den Randleisten 8 und den Trennplatten 4 wie oben beschrieben zu verbessern, ist vorgesehen, dass die jeweilige Randleiste 8 eine erste Oberfläche 81 und eine der ersten Oberfläche 81 abgewandte zweite Oberfläche 82 aufweist, wobei die beiden Oberflächen 81, 82 jeweils eine Oberflächenstruktur 9 aufweisen.

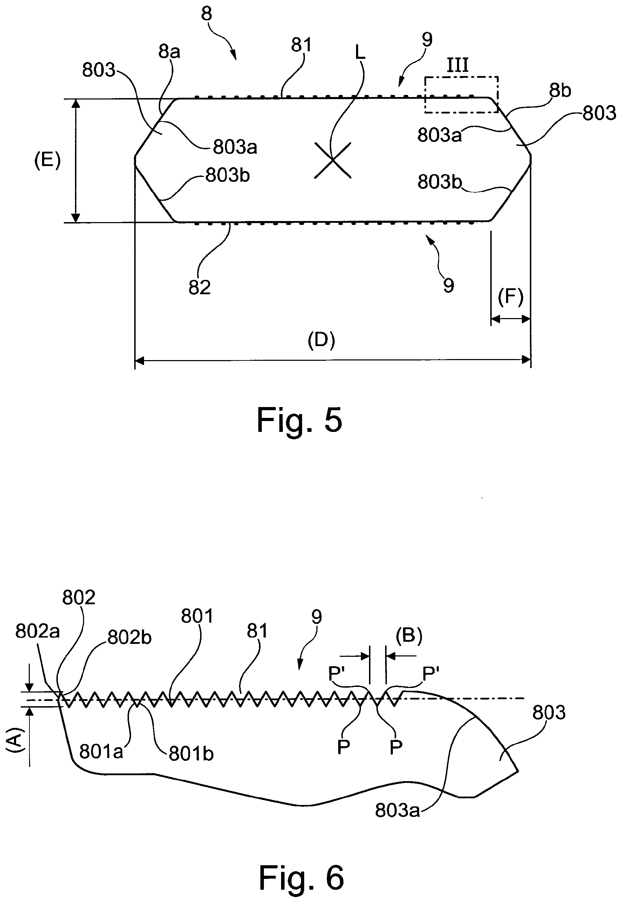

Hierbei handelt es sich beispielsweise gemäß Figuren 3 und 4 um eine Wellenstruktur 9, die jeweils durch eine Mehrzahl an parallel zueinander erstreckten Rillen bzw. Vertiefungen 801 gebildet sind, wobei je zwei benachbarte Vertiefungen 801 durch einen Erhöhung 802 voneinander getrennt sind, wobei die Erhöhungen 802 ebenfalls parallel zueinander verlaufen. Dabei erstrecken sich die Vertiefungen 801 und Erhöhungen 802 entlang einer Längsachse L, die in den Figuren 3 und 4 (sowie in den Figuren 5 bis 12) senkrecht zur Blattebene steht, wobei die Vertiefungen 801 in dem gezeigten Querschnitt, der senkrecht zur Längsachse L verläuft, konkav gekrümmt sind. Die Erhöhungen 802 sind hingegen im senkrecht zur Längsachse L verlaufenden Querschnitt konvex gekrümmt. Der Radius C dieser Krümmungen liegt vorzugsweise im Bereich von 0,1 mm bis 1,0 mm.

Weiterhin liegt die Höhendifferenz A zwischen dem tiefsten Punkt P der jeweiligen Vertiefung 801 und dem höchsten Punkt P' der jeweils benachbarten Erhöhung 802 im Bereich von 0,015mm bis 1,0mm.

Der Abstand B je zweier benachbarter Erhöhungen 802 bzw. je zweier benachbarter Vertiefungen 801 senkrecht zur Längsachse L liegt im Bereich von 0,1mm bis 2,5 mm.

Weiterhin liegt eine Breite D der jeweiligen Randleiste 8 (hier von Dachspitze 803 zu Dachspitze 803, vgl. auch unten), im Bereich von 10mm bis 50 mm.

Weiterhin kann die Höhe E der jeweiligen Randleiste 8, d.h., der Abstand zwischen der ersten und der zweiten Oberfläche 81, 82 im Bereich von 3mm bis 14 mm liegen.

Weiterhin weist die jeweilige Randleiste 8 eine Innenseite 8a auf, die der jeweiligen Passage 3 zugewandt ist, die durch die Randleiste 8 begrenzt wird, sowie eine Außenseite 8b, die ein Teil der Außenseite des Plattenwärmeübertragers 1 bildet.

Gemäß Figur 3 weist die Randleiste 8 weiterhin an der Innenseite 8a sowie an der Außenseite 8b je ein Dach 803 auf, das durch zwei aufeinander zu laufende Flächen 803a, 803b gebildet ist und entsprechend im Querschnitt senkrecht zur Längsachse L eine Dreieckform mit einer abgerundeten Spitze aufweist. Die beiden Dächer 803 können jeweils eine Höhe F aufweisen, die im Bereich von 1mm bis 8 mm liegen kann.

Die oben genannten Längenangaben A bis F stellen lediglich bevorzugte Bereiche dar. Andere Abmessungen sind ebenfalls denkbar.

Wie in den Figuren 1 und 2 dargestellt ist, werden die erfindungsgemäßen Randleisten 8 an den äußeren Rändern der Trennplatten 4 bzw. Deckplatten 5 als seitliche Begrenzung der jeweiligen Wärmeaustauschpassage 30 angeordnet, so dass benachbarte Randleisten 8 jeweils unter Zwischenlage einer Trennplatte 4 nebeneinander angeordnet sind und etwaige an der jeweiligen Innenseite 8a vorhandene Dächer 803 die Wärmeleitstruktur 3 der betreffenden Passage 30 auf Abstand halten, so dass diese beim Lötprozess nicht unter die jeweils angrenzende Randleiste 8 gelangen kann. Die beiden Oberflächen 81, 82 der jeweiligen Randleiste 8 sind mit der jeweils anliegenden Trenn- bzw. ggf. Deckplatte 4, 5 flächig verlötet.

Die Figur 5 zeigt im Zusammenhang mit der Figur 6 eine weitere erfindungsgemäße Randleiste 8 nach Art der Figuren 3 bis 4, wobei die beiden Oberflächenstrukturen 9 der beiden Oberflächen 81, 82, wiederum durch eine Mehrzahl an entlang der Längsachse L erstreckten und zueinander parallelen Vertiefungen 801 gebildet sind, wobei zwischen zwei benachbarten Vertiefungen 801 einer Oberflächenstruktur 9 je eine Erhöhung 802 angeordnet ist. Im Unterschied zu den Figuren 3 und 4 ist nun die jeweilige Vertiefung 801 je durch zwei aufeinanderzulaufende, ebene Flanken 801a, 801b gebildet, die sich an einem tiefsten Punkt P der jeweiligen Vertiefung 801 treffen. Die jeweilige Erhöhung 802 ist demgegenüber durch je zwei aufeinanderzulaufende ebene Flanken 802a, 802b gebildet, die sich an einem höchsten Punkt P' der jeweiligen Erhöhung 802 treffen. Vorzugsweise gehen die Flanken 801a, 801b der Vertiefungen 801 jeweils in die angrenzende Flanken 802a bzw. 802b der benachbarten Erhöhungen 802 über. Die oben genannten Längenangaben A bis F der Figuren 3 und 4 können auch für das in den Figuren 5 und 6 gezeigte Ausführungsbeispiel verwendet werden.

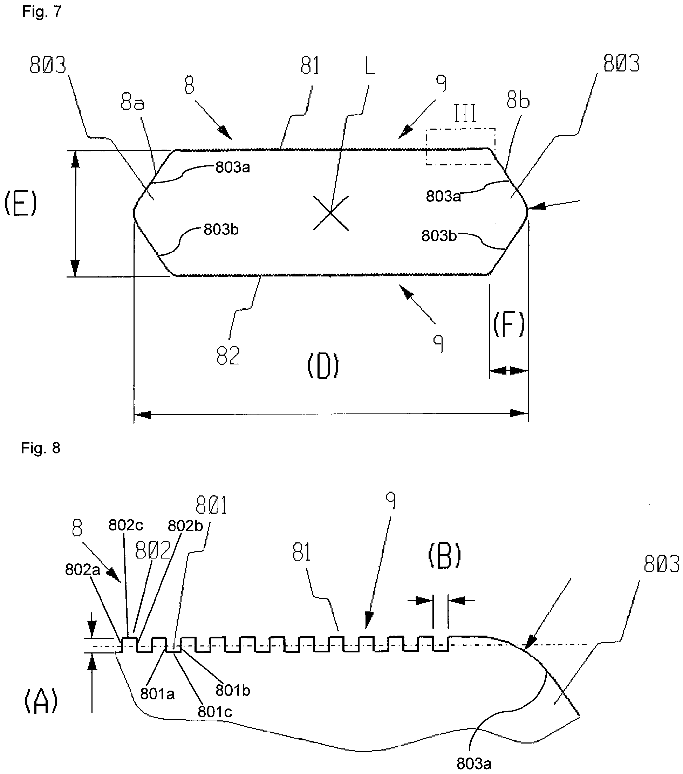

Die Figuren 7 und 8 zeigen einer weitere Ausführungsform einer erfindungsgemäßen Randleiste 8 nach Art der Figuren 3 bis 6, wobei hier im Unterschied zu den Ausführungsformen gemäß Figuren 3 bis 6 die jeweilige Vertiefung 801 durch einen ebenen Boden 801c gebildet, der sich jeweils entlang der Längsachse L erstreckt, und zwar parallel zur Erstreckungsebene der zugehörigen Oberfläche 81 bzw. 82 der Randleiste 8, sowie durch zwei davon senkrecht abgehende, einander gegenüberliegende ebene Flanken 801a, 801b, so dass die Vertiefungen 801 im Querschnitt eine Rechteckform aufweisen. Die jeweilige Erhöhung 802 ist demgegenüber durch je ein ebenes Dach 802c gebildet, wobei die Dächer 802c parallel zu den Böden 801 c verlaufen, sowie durch jeweils zwei von dem jeweiligen Dach 802c senkrecht abgehende, einander gegenüberliegende bzw. abgewandte Flanken 802a, 802b. Im Querschnitt ergibt sich somit ein rechteckförmiges Oberflächenprofil mit im Querschnitt rechteckförmigen Vertiefungen 801 und Erhöhungen 802.

In dem in den Figuren 7 und 8 gezeigten Beispiel der Randleiste 8 können die Höhe E, die Breite D, die Höhe F, und die Höhendifferenz A z.B. die für die Figuren 3 bis 6 genannten Werte annehmen. Weiterhin kann der Abstand B zweier benachbarter Erhöhungen 802 bzw. der Abstand B zweier benachbarter Vertiefungen 801 gemäß Figur 8 z.B. im Bereich von 0,1mm bis 2,5 mm liegen.

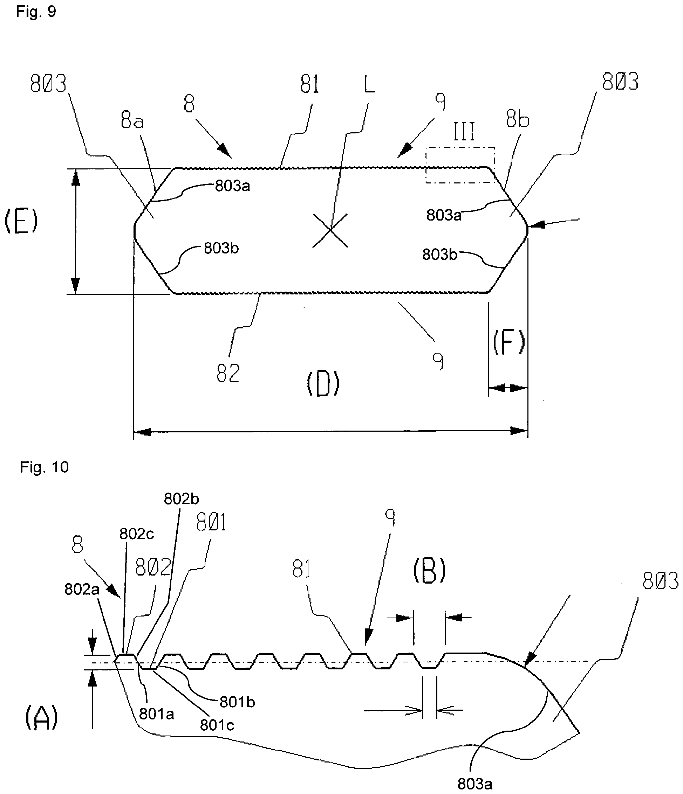

Die Figuren 9 und 10 zeigen eine weitere Ausführungsform einer erfindungsgemäßen Randleiste nach Art der Figuren 7 und 8, wobei im Unterschied zu den Figuren 7 und 8 die Flanken 801 a, 801b der Vertiefungen 801 nunmehr ausgehend vom jeweiligen Boden 801c der jeweiligen Vertiefung 801 auseinanderlaufen. Weiterhin ist im Unterschied zu den Figuren 7 und 8 vorgesehen, dass die Flanken 802a. 802b der jeweiligen Erhöhung 802 in Richtung auf das Dach 802c der jeweiligen Erhöhung 802 aufeinander zulaufen. Die oben genannten Längenangaben A, D, E, und F der Figuren 3 bis 8 können auch für das in den Figuren 9 und 10 gezeigte Ausführungsbeispiel verwendet werden. Der Abstand B zweier benachbarter Erhöhungen 802 kann z.B. auf Höhe der Dächer 802c im Bereich von 0,1mm bis 2,5 mm liegen.

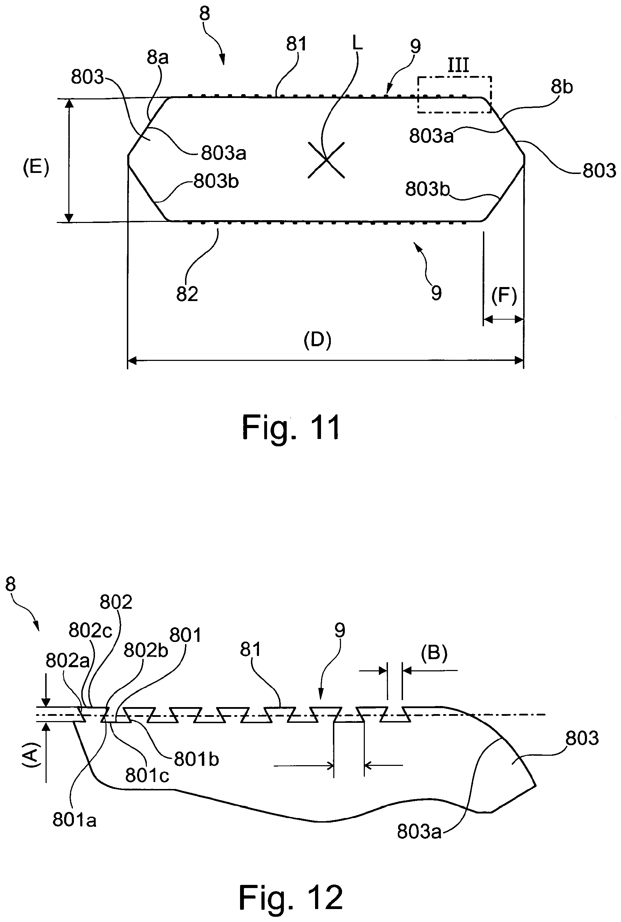

Schließlich ist gemäß einer weiteren Ausführungsform (vgl. Figuren 11 und 12) vorgesehen, dass im Unterschied zu den Figuren 9 und 10 die Flanken 801a, 801b der Vertiefungen 801 ausgehend vom jeweiligen Boden 801c der jeweiligen Vertiefung 801 aufeinander zulaufen. Ebenso ist hier vorgesehen, dass die Flanken 802a. 802b der jeweiligen Erhöhung 802 in Richtung auf das Dach 802c der jeweiligen Erhöhung 802 auseinanderlaufen, so dass die Oberflächenstrukturen 9 im Querschnitt als Schwalbenschwanzprofil ausgebildet sind. Die oben genannten Längenangaben A, D, E, und F der Figuren 3 bis 10 können auch für das in den Figuren 11 und 12 gezeigte Ausführungsbeispiel verwendet werden. Der Abstand B zweier benachbarter Erhöhungen 802 kann z.B. auf Höhe der Dächer 802c im Bereich von 0,1mm bis 2,5 mm liegen.

**Bezugzeichenliste**

| | |
|---|---|
| 1 | Plattenwärmeübertrager |
| 2 | Verteilerfin |
| 3 | Wärmeleitstruktur (Fin) |
| 4 | Trennplatten |
| 5 | Deckplatten |
| 6 | Stutzen |
| 7 | Stutzen |
| 8 | Randleiste |
| 8a | Innenseite |
| 8b | Außenseite |
| 9 | Oberflächenstruktur |
| 30 | Wärmeaustauschpassage |
| 31 | Kanäle |
| 81 | Erste Oberfläche |
| 82 | Zweite Oberfläche |
| 801 | Vertiefung |
| 801a, 801b, 802a, 802b | Flanken |
| 801c | Boden |
| 802 | Erhöhung |
| 802c | Dach |
| 803 | Dach bzw. Nase |
| 803a, 803b | Flächen |
| A', B', C', S, W | Medien |
| A | Höhendifferenz |
| B | Abstand |
| C | Radius |
| D | Breite |
| E | Höhe |
| F | Höhe Dach |
| L | Längsachse |
| P | Tiefster Punkt Vertiefung |
| P' | Höchster Punkt Erhöhung |

## Patentansprüche

1. Plattenwärmeübertrager (1), aufweisend eine Mehrzahl an parallelen Trennplatten (4, 5), die Wärmeaustauschpassagen (3) definieren, wobei die jeweilige Wärmeaustauschpassage (3) an zumindest zwei Seiten durch je eine Randleiste (8) begrenzt ist, wobei die jeweilige Randleiste (8) eine erste Oberfläche (81) und eine der ersten Oberfläche (81) abgewandte zweite Oberfläche (82) aufweist, und wobei die beiden Oberflächen (81, 82) mit je einer zugeordneten Trennplatte (4) verlötet sind, wobei die beiden Oberflächen (81, 82) jeweils eine Oberflächenstruktur (9) mit einer Mehrzahl an regelmäßig angeordneten Erhöhungen (802) und Vertiefungen (801) aufweisen, wobei die jeweilige Randleiste (8) entlang einer Längsachse (L) längserstreckt ausgebildet ist und entlang der Längsachse eine größere Ausdehnung aufweist als senkrecht zur Längsachse,
**dadurch gekennzeichnet**
**dass** der Abstand (B) einer Erhöhung zu einer benachbarter Erhöhung (802) oder einer Vertiefung zu einer benachbarten Vertiefung (801) im Bereich von 0,1mm bis 2,5 mm liegt, wobei sich die Vertiefungen (801) und/oder die Erhöhungen (802) parallel zur Längsachse (L) erstrecken.

2. Plattenwärmeübertrager nach Anspruch 1, **dadurch gekennzeichnet, dass** die Oberflächenstrukturen (9) der beiden Oberflächen (81, 82) der jeweiligen Randleiste (8) jeweils durch eine Mehrzahl an parallel zueinander erstreckten Vertiefungen (801) gebildet sind, wobei je zwei benachbarte Vertiefungen (801) durch eine Erhöhung (802) voneinander getrennt sind.

3. Plattenwärmeübertrager nach Anspruch 1 oder 2, **dadurch gekennzeichnet, dass** die beiden Oberflächenstrukturen (9) jeweils eine gemittelte Rautiefe (R_{z}) von mehr als 15µm, insbesondere von mehr als 30µm aufweisen.

4. Plattenwärmeübertrager nach einem der vorhergenden Ansprüche , **dadurch gekennzeichnet, dass** die jeweilige Randleiste (8) senkrecht zur Längsachse (L) eine Höhe (E) in einer normal zu den angrenzenden Trennplatten (4, 5) verlaufenden Richtung aufweist, und wobei die jeweilige Randleiste (8) senkrecht zur Längsachse (L) und senkrecht zur Höhe (E) eine Breite (D) aufweist, wobei insbesondere die Breite (D) der jeweiligen Randleiste (8) im Bereich von 10mm bis 50 mm liegt, und wobei insbesondere die Höhe (E) der jeweiligen Randleiste (8) im Bereich von 3mm bis 14 mm liegt.

5. Plattenwärmeübertrager nach einem der vorhergehenden Ansprüche, **dadurch gekennzeichnet, dass** eine Höhendifferenz (A) zwischen einem tiefsten Punkt einer Vertiefung (801) und einem höchsten Punkt einer Erhöhung (802) im Bereich von 0,10mm bis 1,00 mm liegt.

6. Plattenwärmeübertrager nach einem der vorhergehenden Ansprüche, **dadurch gekennzeichnet, dass** die Vertiefungen (801) konkave Wellentäler und die Erhöhungen (802) konvexe Wellenberge bilden.

7. Plattenwärmeübertrager nach einem der Ansprüche 1 bis 5, **dadurch gekennzeichnet, dass** die jeweilige Vertiefung (801) je durch zwei aufeinanderzulaufende ebene Flanken (801a, 801b) gebildet ist, die sich an einem tiefsten Punkt (P) der jeweiligen Vertiefung (801) treffen, und wobei die jeweilige Erhöhung (802) durch je zwei aufeinanderzulaufende ebene Flanken (802a, 802b) gebildet ist, die sich an einem höchsten Punkt (P') der jeweiligen Erhöhung (802) treffen.

8. Plattenwärmeübertrager nach einem der Ansprüche 1 bis 5, **dadurch gekennzeichnet, dass** die jeweilige Vertiefung (801) durch einen ebenen Boden (801c) sowie zwei davon abgehende, einander gegenüberliegende ebene Flanken (801a, 801b) gebildet ist, und wobei die jeweilige Erhöhung (802) durch je ein ebenes Dach (802c) sowie zwei davon abgehende, einander gegenüberliegende Flanken (802a, 802b) gebildet ist, wobei die Böden (801c) parallel zu den Dächern (802c) verlaufen.

9. Plattenwärmeübertrager nach Anspruch 8, **dadurch gekennzeichnet, dass** die Flanken (801a, 801b) der jeweiligen Vertiefung (801) parallel zueinander sowie senkrecht zum Boden (801c) der jeweiligen Vertiefung (801) verlaufen, und dass die Flanken (802a, 802b) der jeweiligen Erhöhung (802) parallel zueinander sowie senkrecht zum Dach (802c) der jeweiligen Erhöhung (802) verlaufen.

10. Plattenwärmeübertrager nach Anspruch 8, **dadurch gekennzeichnet, dass** die Flanken (801a, 801b) der Vertiefungen (801) ausgehend vom Boden (801c) der jeweiligen Vertiefung (801) auseinanderlaufen, und dass die Flanken (802a. 802b) der jeweiligen Erhöhung (802) in Richtung auf das Dach (802c) der jeweiligen Erhöhung (802) aufeinander zulaufen.

11. Plattenwärmeübertrager nach Anspruch 8, **dadurch gekennzeichnet, dass** die Flanken (801a, 801b) der Vertiefungen (801) ausgehend vom Boden (801c) der jeweiligen Vertiefung (801) aufeinander zulaufen, und dass die Flanken (802a, 802b) der jeweiligen Erhöhung (802) in Richtung auf das Dach (802c) der jeweiligen Erhöhung (802) auseinanderlaufen.

12. Plattenwärmeübertrager nach einem der vorhergehenden Ansprüche, **dadurch gekennzeichnet, dass** die jeweilige Randleiste (8) eine der zugeordneten Wärmeaustauschpassage (3) zugewandte Innenseite (8a) sowie eine der Innenseite (8a) abgewandte Außenseite (8b) aufweist, wobei die Innenseite (8a) und die Außenseite (8b) jeweils die erste Oberfläche (81) mit der zweiten Oberfläche (82) verbinden, wobei insbesondere die Innenseite (8a) und/oder die Außenseite (8b) jeweils zwei zu einem Dach (803) aufeinander zulaufende Flächen (803a, 803b) aufweisen, und wobei vorzugsweise das jeweilige Dach (803) eine Höhe (F) im Bereich von 1mm bis 8 mm aufweist.

13. Verfahren zur Herstellung eines Plattenwärmeübertragers (1), wobei zumindest eine Randleiste (8) bereitgestellt wird, die eine erste Oberfläche (81) und eine der ersten Oberfläche (81) abgewandte zweite Oberfläche (82) aufweist, wobei die beiden Oberflächen (81, 82) bearbeitet werden, so dass die beiden Oberflächen (81, 82) jeweils eine Oberflächenstruktur (9) mit einer Mehrzahl an regelmäßig angeordneten Erhöhungen (802) und Vertiefungen (801) aufweisen, und wobei die beiden Oberflächen (81, 82) mit je einer benachbarten Trennplatte (4) verlötet werden, und wobei die jeweilige Randleiste (8) entlang einer Längsachse (L) längserstreckt ausgebildet ist und entlang der Längsachse eine größere Ausdehnung aufweist als senkrecht zur Längsachse, **dadurch gekennzeichnet, dass** der Abstand (B) einer Erhöhung zu einer benachbarter Erhöhung (802) oder einer Vertiefung zu einer benachbarten Vertiefung (801) im Bereich von 0,1mm bis 2,5 mm liegt wobei sich die Vertiefungen (801) und/oder die Erhöhungen (802) parallel zur Längsachse (L) erstrecken.

## Claims

1. Plate heat exchanger (1), having a plurality of parallel partition plates (4, 5) that define heat exchange passages (3), wherein the respective heat exchange passage (3) is delimited on at least two sides by a side bar (8) each, wherein the respective side bar (8) has a first surface (81) and a second surface (82) facing away from the first surface (81), and wherein the two surfaces (81, 82) are each soldered to an associated partition plate (4), wherein the two surfaces (81, 82) each have a surface structure (9) with a plurality of regularly arranged elevations (802) and recesses (801), wherein the respective side bar (8) is elongated along a longitudinal axis (L) and has a greater extent along the longitudinal axis than perpendicular to the longitudinal axis,
**characterized in that**
the distance (B) of an elevation to an adjacent elevation (802) or of a recess to an adjacent recess (801) is in the range of 0.1 mm to 2.5 mm, wherein the recesses (801) and/or the elevations (802) extend in parallel to the longitudinal axis (L).

2. Plate heat exchanger according to Claim 1, **characterized in that** the surface structures (9) of the two surfaces (81, 82) of the respective side bar (8) are each formed by a plurality of recesses (801) extending in parallel to one another, wherein each two adjacent recesses (801) are separated from one another by an elevation (802).

3. Plate heat exchanger according to Claim 1 or 2, **characterized in that** the two surface structures (9) each have an average roughness depth (R_{z}) of more than 15 µm, in particular, of more than 30 µm.

4. Plate heat exchanger according to one of the preceding claims,
**characterized in that** the respective side bar (8) has a height (E) perpendicular to the longitudinal axis (L) in a direction running normally to the adjacent partition plates (4, 5), and wherein the respective side bar (8) has a width (D) perpendicular to the longitudinal axis (L) and perpendicular to the height (E), wherein the width (D) of the respective side bar (8) is, in particular, in the range of 10 mm to 50 mm, and wherein the height (E) of the respective side bar (8) is, in particular, in the range of 3 mm to 14 mm.

5. Plate heat exchanger according to one of the preceding claims,
**characterized in that** a height difference (A) between a lowest point of a recess (801) and a highest point of an elevation (802) is in the range of 0.10 mm to 1.00 mm.

6. Plate heat exchanger according to one of the preceding claims,
**characterized in that** the recesses (801) form concave wave troughs, and the elevations (802) form convex wave peaks.

7. Plate heat exchanger according to one of Claims 1 through 5,
**characterized in that** the respective recess (801) is formed in each case by two planar flanks (801a, 801b) which converge toward one another and meet at a lowest point (P) of the respective recess (801), and wherein the respective elevation (802) is formed in each case by two planar flanks (802a, 802b) which converge toward one another and meet at a highest point (P') of the respective elevation (802).

8. Plate heat exchanger according to one of Claims 1 through 5,
**characterized in that** the respective recess (801) is formed by a planar floor (801c) and two opposing planar flanks (801a, 801b) extending therefrom, and wherein the respective elevation (802) is formed in each case by a planar roof (802c) and two opposing flanks (802a, 802b) extending therefrom, wherein the floors (801c) run in parallel to the roofs (802c).

9. Plate heat exchanger according to Claim 8, **characterized in that** the flanks (801a, 801b) of the respective recess (801) run in parallel to one another and perpendicular to the floor (801c) of the respective recess (801), and that the flanks (802a, 802b) of the respective elevation (802) run in parallel to one another and perpendicular to the roof (802c) of the respective elevation (802).

10. Plate heat exchanger according to Claim 8, **characterized in that** the flanks (801a, 801b) of the recesses (801) proceeding from the bottom (801c) of the respective recess (801) diverge from one another, and that the flanks (802a, 802b) of the respective elevation (802) converge toward one another in the direction of the roof (802c) of the respective elevation (802).

11. Plate heat exchanger according to Claim 8, **characterized in that** the flanks (801a, 801b) of the recesses (801) proceeding from the floor (801c) of the respective recess (801) converge toward one another, and that the flanks (802a, 802b) of the respective elevation (802) diverge from one another in the direction of the roof (802c) of the respective elevation (802).

12. Plate heat exchanger according to one of the preceding claims,
**characterized in that** the respective side bar (8) has an inner side (8a) facing the associated heat exchange passage (3) and an outer side (8b) facing away from the inner side (8a), wherein the inner side (8a) and the outer side (8b) respectively connect the first surface (81) to the second surface (82), wherein the inner side (8a) and/or the outer side (8b) each have, in particular, two surfaces (803a, 803b) that converge toward one another to form a roof (803), and wherein the respective roof (803) has preferably a height (F) in the range of 1 mm to 8 mm.

13. Method for producing a plate heat exchanger (1), wherein at least one side bar (8) is provided which has a first surface (81) and a second surface (82) facing away from the first surface (81), wherein the two surfaces (81, 82) are processed so that the two surfaces (81, 82) each have a surface structure (9) with a plurality of regularly arranged elevations (802) and recesses (801), and wherein the two surfaces (81, 82) are each soldered to an adjacent partition plate (4), and wherein the respective side bar (8) is elongated along a longitudinal axis (L) and has a greater extent along the longitudinal axis than perpendicular to the longitudinal axis, **characterized in that** the distance (B) of an elevation to an adjacent elevation (802) or of a recess to an adjacent recess (801) is in the range of 0.1 mm to 2.5 mm, wherein the recesses (801) and/or the elevations (802) extend in parallel to the longitudinal axis (L).

## Revendications

1. Échangeur thermique à plaques (1), présentant une pluralité de plaques de séparation (4, 5) parallèles, qui définissent des passages d'échange de chaleur (3), dans lequel le passage d'échange de chaleur (3) respectif est limité sur au moins deux côtés par une barre latérale (8) par côté, dans lequel la barre latérale (8) respective présente une première surface (81) et une deuxième surface (82) opposée à la première surface (81), et dans lequel les deux surfaces (81, 82) sont soudées chacune avec une plaque de séparation (4) associée, dans lequel les deux surfaces (81, 82) présentent respectivement une structure de surface (9) comprenant une pluralité de crêtes (802) et de creux (801) disposés de manière régulière, dans lequel la barre latérale (8) respective est formée étendue le long d'un axe longitudinal (L) et présente une extension plus grande le long de l'axe longitudinal que perpendiculairement à l'axe longitudinal,
**caractérisé en ce**
**que** la distance (B) d'une crête à une crête (802) voisine ou d'un creux à un creux (801) voisin se situe dans la plage allant de 0,1 mm à 2,5 mm, les creux (801) et/ou les crêtes (802) s'étendant parallèlement à l'axe longitudinal (L).

2. Échangeur thermique à plaques selon la revendication 1, **caractérisé en ce que** les structures de surface (9) des deux surfaces (81, 82) de la barre latérale (8) respective sont formées respectivement par une pluralité de creux (801) s'étendant parallèlement les uns par rapport aux autres, deux creux (801) voisins étant respectivement séparés l'un de l'autre par une crête (802).

3. Échangeur thermique à plaques selon la revendication 1 ou 2, **caractérisé en ce que** les deux structures de surface (9) présentent respectivement une rugosité de surface (R_{z}) moyenne supérieure à 15 µm, en particulier supérieure à 30 µm.

4. Échangeur thermique à plaques selon l'une quelconque des revendications précédentes, **caractérisé en ce que** la barre latérale (8) respective présente perpendiculairement à l'axe longitudinal (L) une hauteur (E) dans une direction s'étendant perpendiculairement aux plaques de séparation (4, 5) adjacentes, et la barre latérale (8) respective présentant, perpendiculairement à l'axe longitudinal (L) et perpendiculairement à la hauteur (E), une largeur (D), en particulier la largeur (D) de la barre latérale (8) respective se situant dans la plage allant de 10 mm à 50 mm, et en particulier la hauteur (E) de la barre latérale (8) respective se situant dans la plage allant de 3 mm à 14 mm.

5. Échangeur thermique à plaques selon l'une quelconque des revendications précédentes, **caractérisé en ce qu'**une différence de hauteur (A) entre un point le plus profond d'un creux (801) et un point le plus élevé d'une crête (802) se situe dans la plage allant de 0,10 mm à 1,00 mm.

6. Échangeur thermique à plaques selon l'une quelconque des revendications précédentes, **caractérisé en ce que** les creux (801) forment des dépressions concaves et les crêtes (802) forment des sommets convexes.

7. Échangeur thermique à plaques selon l'une quelconque des revendications 1 à 5, **caractérise en ce que** le creux (801) respectif est formé par deux flancs (801a, 801b) plans s'étendant l'un vers l'autre, lesquels se réunissent au point le plus profond (P) du creux (801) respectif, et la crête (802) respective étant formée par deux flancs (802a, 802b) plans s'étendant l'un vers l'autre, lesquels se réunissent à un point le plus élevé (P') de la crête (802) respective.

8. Échangeur thermique à plaques selon l'une quelconque des revendications 1 à 5, **caractérisé en ce que** le creux (801) respectif est formé par un fond (801c) plan ainsi que par deux flancs (801a, 801b) plans opposés l'un à l'autre sortant de celui-ci, et la crête (802) respective étant formée par un toit (802c) plan ainsi que par deux flancs (802a, 802b) plans opposés l'un à l'autre sortant de celui-ci, les fonds (801c) s'étendant parallèlement aux toits (802c).

9. Échangeur thermique à plaques selon la revendication 8, **caractérisé en ce que** les flancs (801a, 801b) du creux (801) respectif s'étendent parallèles l'un à l'autre ainsi que perpendiculaires au fond (801c) du creux (801) respectif, et que les flancs (802a, 802b) de la crête (802) respective s'étendent parallèles l'un à l'autre ainsi que perpendiculaires au toit (802c) de la crête (802) respective.

10. Échangeur thermique à plaques selon la revendication 8, **caractérisé en ce que** les flancs (801a, 801b) des creux (801) s'écartent l'un de l'autre à partir du fond (801c) du creux (801) respectif, et que les flancs (802a, 802b) de la crête (802) respective se rapprochent l'un de l'autre dans la direction vers le toit (802c) de la crête (802) respective.

11. Échangeur thermique à plaques selon la revendication 8, **caractérisé en ce que** les flancs (801a, 801b) des creux (801) se rapprochent l'un de l'autre à partir du fond (801c) du creux (801) respectif, et que les flancs (802a, 802b) de la crête (802) respective s'éloignent l'un de l'autre dans la direction vers le toit (802c) de la crête (802) respective.

12. Échangeur thermique à plaques selon l'une quelconque des revendications précédentes, **caractérisé en ce que** la barre latérale (8) respective présente une face intérieure (8a) faisant face au passage d'échange de chaleur (3) associé, ainsi qu'une face extérieure (8b) opposée à la face intérieure (8a), la face intérieure (8a) et la face extérieure (8b) reliant respectivement la première surface (81) à la deuxième surface (82), en particulier la face intérieure (82a) et/ou la face extérieure (8b) présentant respectivement deux surfaces (803a, 803b) se rapprochant l'une à l'autre vers un toit (803), et de préférence le toit (803) respectif présentant une hauteur (F) située dans une plage allant de 1 mm à 8 mm.

13. Procédé de fabrication d'un échangeur thermique à plaques (1), dans lequel au moins une barre latérale (8) est fournie, laquelle présente une première surface (81) et une deuxième surface (82) opposée à la première surface (81), dans lequel les deux surfaces (81, 82) sont traitées de telle façon que les deux surfaces (81, 82) présentent respectivement une structure de surface (9) comprenant une pluralité de crêtes (802) et de creux (801) disposés de manière régulière, et dans lequel les deux surfaces (81, 82) sont soudées chacune avec une plaque de séparation (4) voisine, dans lequel la barre latérale (8) respective est formée s'étendant le long d'un axe longitudinal (L) et présente une plus grande extension que perpendiculairement à l'axe longitudinal, **caractérisé en ce que** la distance (B) d'une crête à une crête (802) voisine ou d'un creux à un creux (801) voisin se situe dans la plage allant de 0,1 mm à 2,5 mm, les creux (801) et/ou les crêtes (802) s'étendant parallèlement à l'axe longitudinal (L).
